# EUROPEAN PATENT SPECIFICATION

(11) **EP 3 584 868 B1**
(45) Date of publication and mention of the grant of the patent: **08.05.2024**
(21) Application number: 18880676.4
(22) Date of filing: 05.11.2018
(51) Int. Cl.: H01M 10/04, H01M 50/207, H01M 50/22, H01M 50/466

(54) **MANUFACTURING METHOD OF SECONDARY BATTERY**
HERSTELLUNGSVERFAHREN FÜR EINE SEKUNDÄRBATTERIE
PROCÉDÉ DE FABRICATION D'ACCUMULATEUR

(30) Priority: 21.11.2017 KR 20170155444
(43) Date of publication of application: 25.12.2019
(73) Proprietor: LG Energy Solution, Ltd., Seoul 07335 (KR)
(72) Inventor: KIM, Sang Jih, Daejeon 34122 (KR); RYU, Sang Baek, Daejeon 34122 (KR)
(74) Representative: Plasseraud IP
(86) International application number: PCT/KR2018/013320
(87) International publication number: WO 2019/103351

(56) References cited:
- WO-A1-2017/090937
- KR-A- 20130 135 017
- KR-A- 20130 135 129
- KR-A- 20140 101 510
- KR-A- 20150 062 738
- KR-A- 20150 092 854
- KR-B1- 101 414 092
- US-A1- 2013 108 907
- US-A1- 2014 050 958
- US-A1- 2014 234 679
- US-A1- 2014 315 074
- US-A1- 2015 113 796

## Description

### CROSS-REFERENCE TO RELATED APPLICATION

The present application claims the benefit of the priority of Korean Patent Application No. 10-2017-0155444, filed on November 21, 2017.

### TECHNICAL FIELD

The present invention relates to a method for manufacturing a secondary battery having an improved degree of freedom in shape in comparison to a secondary battery according to the related art.

### BACKGROUND ART

As the shape and type of electronic equipment accommodating a secondary battery that is repeatedly chargeable and dischargeable are diversified, shapes required for the secondary battery are also diversified. Particularly, with the tendency of the miniaturization and large capacity of the electronic equipment, it is required that the shapes of the secondary batteries are also diversified.

That is, even in the case in which the electronic equipment is miniaturized, the secondary battery has to be irregular in shape so as to maintain the capacity of the secondary battery accommodated in the electronic equipment event though the electronic equipment is miniaturized. Also, the secondary battery has to be diversified in shape so as to utilize an internal space of the electronic equipment, which has not been utilized conventionally, thereby increasing in capacity of the secondary battery.

An electrode assembly having a structure in which an electrode and a separator are alternately stacked is accommodated in the secondary battery. Thus, since the diversity in shape of the secondary battery is required, it is necessary also to improve the diversity in shape of the electrode assembly.

US 2014/050958 A1 discloses An electrode assembly comprising at least one stacked and folded type electrode stack in which a plurality of electrode units are stacked in a state that the electrode units are separated by a sheet of separating film, wherein the stacked and folded type electrode stack comprises at least one stepped portion formed of electrode units having different areas and stacked on one another with the sheet of separating film being disposed therebetween.

US 2013/108907 A1 discloses a A method for manufacturing a battery cell, comprising the steps of obtaining a set of layers for the battery cell, wherein the set of layers comprises a cathode with an active coating, a separator, and an anode with an active coating; sealing the layers in a pouch to form the battery cell, wherein the pouch is flexible; and forming a curve in the battery cell by applying a pressure to the layers using a set of curved plates.

### DISCLOSURE OF THE INVENTION

### TECHNICAL PROBLEM

Therefore, an object to be solved by the present invention is to manufacture an electrode assembly accommodated in a secondary battery having various shapes in comparison to a secondary battery according to the related art.

### TECHNICAL SOLUTION

To achieve the above object, according to the present invention, a method for manufacturing an electrode assembly includes: an electrode stack preparation step of preparing an electrode stack which includes a first unit cell having a first surface area and a second unit cell having a second surface area less than that of the first surface area and which has a structure in which the second unit cell is disposed on one surface of the first unit cell; and a curved surface formation step of pressing at least a portion of an independent area, which does not overlap the second unit cell, of the first unit cell to form a curved surface on at least a portion of the independent area; and an accommodation step of accommodating the electrode stack having the curved surface in a pouch-type exterior having an internal space corresponding to a shape of the electrode stack having the curved surface, wherein the electrode stack preparation step comprises: manufacturing the first unit cell comprising a first sub cell having a structure in which a first separation film is folded after an electrode and a separator are disposed on the first separation film; and manufacturing the second unit cell comprising a second sub cell having a structure in which a second separation film is folded after an electrode and a separator are disposed on the second separation film.

The electrode stack preparation step may include: manufacturing the first unit cell having the first surface area by stacking a plurality of first sub cells after manufacturing the plurality of first sub cells, each of which is manufactured by stacking an electrode and a separator; and manufacturing the second unit cell having the second surface area by stacking a plurality of second sub cells after manufacturing the plurality of second sub cells, each of which is manufactured by stacking an electrode and a separator.

Each of the first and second sub cell may be a bi-cell.

### ADVANTAGEOUS EFFECTS

According to the present invention, the electrode assembly accommodated in the secondary battery having various shape in comparison to the secondary battery according to the related art may be manufactured.

### BRIEF DESCRIPTION OF THE DRAWINGS

FIG. 1 is a perspective view of an electrode stack manufactured in an intermediate process when an electrode assembly is manufactured according to an embodiment of the present invention.
FIG. 2 is a perspective view of the electrode assembly according to an embodiment of the present invention.
FIG. 3 is a side view illustrating an example of a sub cell constituting the electrode assembly according to an embodiment of the present invention.
FIG. 4 is a side view illustrating another example of the sub cell constituting the electrode assembly according to an embodiment of the present invention.

### MODE FOR CARRYING OUT THE INVENTION

Hereinafter, a method for manufacturing an electrode assembly according to an embodiment of the present invention will be described with reference to the accompanying drawings.

### Method for manufacturing electrode assembly

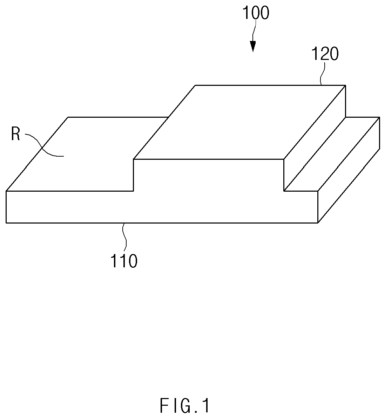

FIG. 1 is a perspective view of an electrode stack manufactured in an intermediate process when an electrode assembly is manufactured according to an embodiment of the present invention.

A method for manufacturing an electrode assembly according to an embodiment of the present invention includes a step of manufacturing a first unit cell having a first surface area and having a structure in which an electrode and a separator are alternately disposed and a step of manufacturing a second unit cell having a second surface area and having a structure in which an electrode and a separator are alternately disposed. Here, the second surface area is less than the first surface area, and each of the electrode and the separator may have a flat plate shape.

In this specification, that 'the first unit cell has the first surface area' may be interpreted as a meaning in which the electrode and the separator, which constitute the first unit cell, are vertically stacked, and a surface area of the first unit cell when viewed from an upper or lower side of the first unit cell corresponds to the first surface area.

Also, the plate-shaped electrode and the plate-shaped separator, which constitute the second unit cell, may have surface areas different from each other. Thus, in this specification, that 'the second unit cell has the second surface area' may be interpreted as a meaning in which the electrode and the separator, which constitute the second unit cell, are vertically stacked, and a surface area of the second unit cell when viewed from an upper or lower side of the second unit cell corresponds to the second surface area.

Also, as illustrated in FIG. 1, the method for manufacturing the electrode assembly according to an embodiment of the present invention may include an electrode stack preparation step of preparing an electrode stack which includes the first unit cell having the first surface area and the second unit cell having the second surface area and which has a structure in which the second unit cell is disposed on one surface of the first unit cell. FIG. 1 illustrates an electrode stack 100 after the electrode stack preparation step. As described above, since the second surface area is less than the first surface area, a stepped portion may be formed on the electrode stack 100 as illustrated in FIG. 1.

As described above, since the stepped portion is formed on the electrode stack 100, a surface, which faces the second unit cell 120, of surfaces of the first unit cell 110 may be divided into an area overlapping the second unit cell 120 and an area that does not overlap the second unit cell 120. In this specification, the area, which does not overlap the second unit cell 120, of the surface of the first unit cell 110 facing the second unit cell 120 is called an 'independent area'. Although there are two independent areas in the electrode stack 100 of FIG. 1, for convenience of description, only a relatively large independent area of the two independent areas is denoted by a reference symbol R, and also, the relatively large independent area will be mainly described.

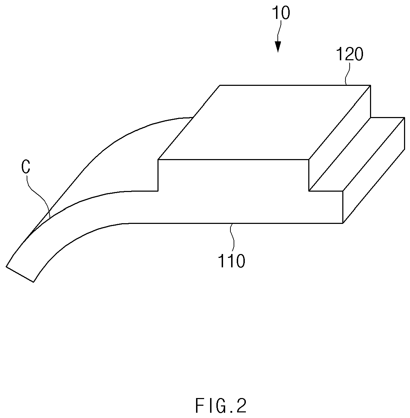

Thus, the method for manufacturing the electrode assembly according to the present invention includes a curved surface formation step of pressing at least a portion of the independent area R, which does not overlap the second unit cell 120, of the first unit cell 110 to form a curved surface C (see FIG. 2) on at least a portion of the independent area R. For convenience of description, a structure, which does not have the curved surface, of the electrode-stacked structure including the first unit cell and the second unit cell is called an 'electrode stack', and the structure having the curved surface is called 'an electrode assembly'.

As illustrated in FIG. 2, in the curved surface formation step, the curved surface C may be formed over one entire independent area R. Alternatively, on the other hand, the curved surface may be formed on only a portion of the one independent area. Also, when a plurality of independent areas are formed on the electrode stack, the curved surface may be formed on each of the independent areas or may be formed on only a portion of the plurality of independent areas.

As illustrated in FIG. 2, in the curved surface formation step, the curved surface C may be formed on both of an upper surface and a lower surface of the entire independent area R. Thus, in the curved surface formation step, the curved surface C may be formed to have a shape in which the independent area R is bent downward as illustrated in FIG. 2. On the other hand, in the curved surface formation step, the curved surface may be formed to have a shape in which the independent area is bent upward.

The first unit cell and the second unit cell according to the present invention may have various structures. For example, the sub cell having the structure in which the electrode and the separator are alternately stacked may be manufactured first, and then, the sub cells may be stacked again to manufacture the first unit cell and the second unit cell.

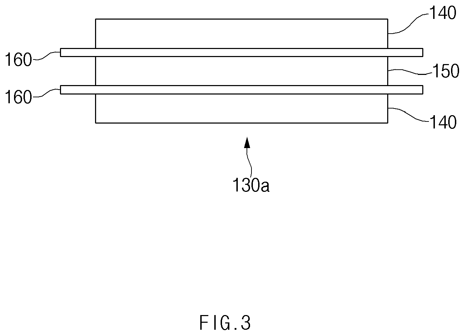

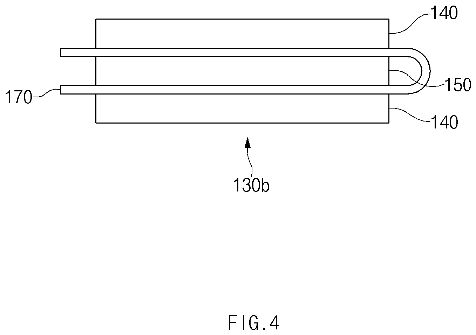

FIG. 3 is a side view illustrating an example of a sub cell constituting the electrode assembly not forming part of the present invention, and FIG. 4 is a side view illustrating another example of the sub cell constituting the electrode assembly according to an embodiment of the present invention.

As illustrated in FIG. 3, a sub cell 130a has a structure in which a first electrode 140, a separator 160, and a second electrode 150 are alternately stacked. Here, the first electrode 140 may have a polarity different from that of the second electrode 150. FIG. 3 illustrates a bi-cell, in which the outermost electrodes have the same polarity, as an example of the sub cell 130a.

When based on the above description, in the method for manufacturing the electrode assembly according to an embodiment of the present invention, the electrode stack preparation step may include a process of manufacturing a first unit cell having a first surface area by stacking a plurality of first sub cells after manufacturing the plurality of first sub cells, each of which is manufactured by alternately stacking an electrode and a separator. Similarly, the electrode stack preparation step may include a process of manufacturing a second unit cell having a second surface area by stacking a plurality of second sub cells after manufacturing the plurality of second sub cells, each of which is manufactured by alternately stacking an electrode and a separator.

As illustrated in FIG. 4, a sub cell 130b has a structure in which a separation film 170 is folded, and the first electrode 140 and the second electrode 150 are respectively disposed on the outermost surface of the separation film and in a region between the folded separation film 170. Here, the first electrode 140 may have a polarity different from that of the second electrode 150. FIG. 4 illustrates a bi-cell, in which the outermost electrodes have the same polarity, as an example of the sub cell 130b. Although the separation film 170 is folded only once in FIG. 4, the sub cell 130b may have a structure in which the separation film 170 is folded two times or more.

When based on the above description, in the method for manufacturing the electrode assembly according to an embodiment of the present invention, the electrode stack preparation step includes a process of manufacturing a first unit cell including the first sub cell having the structure in which the first separation film is folded after the electrode and the separator are disposed on the first separation film. Similarly, the electrode stack preparation step includes a process of manufacturing a second unit cell including the second sub cell having the structure in which the second separation film is folded after the electrode and the separator are disposed on the second separation film.

Hereinafter, the electrode assembly according to an embodiment of the present invention will be described based on the accompanying drawings and the above-described contents.

### Electrode assembly

As illustrated in FIG. 2, an electrode assembly 10 according to an embodiment of the present invention may include a first unit cell 110 having a first surface area and a second unit cell 120 having a second surface area less than the first surface area. Here, the second unit cell 120 may be disposed on one surface of the first unit cell 110, and a curved surface C may be formed on at least a portion of an independent area R (see FIG. 1), which does not overlap the second unit cell 120, of the first unit cell 110.

Here, as described above, each of the first unit cell and the second unit cell may include a plurality of sub cells 130a, each of which has a structure in which an electrode and a separator are alternately stacked, as illustrated in FIG. 3.

On the other hand, each of the first unit cell and the second unit cell may include a sub cell 130b having a structure in which a first separation film and a second separation film is folded after stacking an electrode and a separator on a first separation film and a second separation film as illustrated in FIG. 4.

### Secondary battery and method for manufacturing secondary battery

According to an embodiment of the present invention, a step of accommodating the electrode assembly based on the above-described contents into a pouch-type exterior may be further performed.

That is, a method for manufacturing a secondary battery according to an embodiment of the present invention may include an electrode stack preparation step of preparing an electrode stack which includes a first unit cell having a first surface area and a second unit cell having a second surface area less than that of the first surface area and which has a structure in which the second unit cell is disposed on one surface of the first unit cell, a curved surface formation step of pressing at least a portion of an independent area, which does not overlap the second unit cell, of the first unit cell to manufacture an electrode assembly in which a curved surface is formed on at least a portion of the independent area, and an accommodation step of accommodating the electrode assembly in a pouch-type exterior having an internal space corresponding to a shape of the electrode assembly having the curved surface.

Thus, the secondary battery according to an embodiment of the present invention includes the first unit cell having the first surface area, the second unit cell having the second surface area less than the first surface area and disposed on the one surface of the first unit cell, and the pouch-type exterior accommodating the first unit cell and the second unit cell and having the internal space corresponding to the shape of each of the first unit cell and the second unit cell. The curved surface may be formed on at least a portion of the independent area, which does not overlap the second unit cell, of the first unit cell.

However, on the other hand, the time-series relationship between the curved surface formation step and the accommodation step may be changed. That is to say, the step of accommodating the electrode assembly (or the electrode stack) in the pouch-type exterior may be performed first, and then, the curved surface formation step may be performed.

That is, a method for manufacturing a secondary battery according to another embodiment of the present invention may include an electrode stack preparation step of preparing an electrode stack which includes a first unit cell having a first surface area and a second unit cell having a second surface area less than that of the first surface area and which has a structure in which the second unit cell is disposed on one surface of the first unit cell, an accommodation step of accommodating the electrode stack in a pouch-type exterior having an internal space corresponding to a shape of the electrode stack, and a curved surface formation step of pressing at least a portion of an area of the first unit cell, which does not overlap the second unit cell, on an outer surface of the pouch-type exterior in which the electrode stack is accommodated.

While the embodiments of the present invention have been described with reference to the specific embodiments, it will be apparent to those skilled in the art that various changes and modifications may be made without departing from the scope of the invention as defined in the following claims.

## Claims

1. A method for manufacturing a pouch-type secondary battery, the method comprising:
an electrode stack preparation step of preparing an electrode stack which comprises a first unit cell having a first surface area and a second unit cell having a second surface area less than that of the first surface area and which has a structure in which the second unit cell is disposed on one surface of the first unit cell;
a curved surface formation step of pressing at least a portion of an independent area, which does not overlap the second unit cell, of the first unit cell to manufacture the electrode stack in which a curved surface is formed on at least a portion of the independent area; and
an accommodation step of accommodating the electrode stack having the curved surface in a pouch-type exterior having an internal space corresponding to a shape of the electrode stack having the curved surface,
wherein the electrode stack preparation step comprises:
manufacturing the first unit cell comprising a first sub cell having a structure in which a first separation film is folded after an electrode and a separator are disposed on the first separation film; and
manufacturing the second unit cell comprising a second sub cell having a structure in which a second separation film is folded after an electrode and a separator are disposed on the second separation film.

2. The method of claim 1, wherein the electrode stack preparation step comprises:
manufacturing the first unit cell having the first surface area by stacking a plurality of first sub cells after manufacturing the plurality of first sub cells, each of which is manufactured by stacking electrodes and separators; and
manufacturing the second unit cell having the second surface area by stacking a plurality of second sub cells after manufacturing the plurality of second sub cells, each of which is manufactured by stacking electrodes and separators.

3. The method of claim 1 or 2, wherein each of the first and second sub cell is a bi-cell.

## Patentansprüche

1. Verfahren zur Herstellung einer taschenartigen Sekundärbatterie, wobei das Verfahren aufweist:
einen Elektrodenstapelvorbereitungsschritt zum Vorbereiten eines Elektrodenstapels, der eine erste Einheitszelle mit einer ersten Oberflächenausdehnung und eine zweite Einheitszelle mit einer zweiten Oberflächenausdehnung aufweist, die kleiner ist als jene der ersten Oberflächenausdehnung, und der eine Struktur hat, in der die zweite Einheitszelle auf einer Oberfläche der ersten Einheitszelle angeordnet ist;
einen Gekrümmte-Oberfläche-Bildungsschritt zum Pressen von zumindest einem die zweite Einheitszelle nicht überlappenden Abschnitt einer unabhängigen Fläche der ersten Einheitszelle zur Herstellung des Elektrodenstapels, in dem auf zumindest einem Abschnitt der unabhängigen Fläche eine gekrümmte Oberfläche gebildet wird; und
einen Aufnahmeschritt zum Aufnehmen des Elektrodenstapels mit der gekrümmten Oberfläche in einem taschenartigen Äußeren mit einem Innenraum, der einer Form des Elektrodenstapels mit der gekrümmten Oberfläche entspricht,
wobei der Elektrodenstapelvorbereitungsschritt aufweist:
Herstellen der ersten Einheitszelle, die eine erste Teilzelle mit einer Struktur aufweist, in der eine erste Trennfolie gefaltet wird, nachdem eine Elektrode und ein Separator auf der ersten Trennfolie angeordnet sind; und
Herstellen der zweiten Einheitszelle, die eine zweite Teilzelle mit einer Struktur aufweist, in der die zweite Trennfolie gefaltet wird, nachdem eine Elektrode und ein Separator auf der zweiten Trennfolie angeordnet sind.

2. Das Verfahren von Anspruch 1, wobei der Elektrodenstapelvorbereitungsschritt aufweist:
Herstellen der ersten Einheitszelle mit der ersten Oberflächenausdehnung durch Stapeln einer Mehrzahl erster Teilzellen nach der Herstellung der Mehrzahl erster Teilzellen, deren jede durch Stapeln von Elektroden und Separatoren hergestellt ist; und
Herstellen der zweiten Einheitszelle mit der zweiten Oberflächenausdehnung durch Stapeln einer Mehrzahl zweiter Teilzellen nach der Herstellung der Mehrzahl zweiter Teilzellen, deren jede durch Stapeln von Elektroden und Separatoren hergestellt ist.

3. Das Verfahren von Anspruch 1 oder 2, wobei jede der ersten und zweiten Teilzelle eine Bi-Zelle ist.

## Revendications

1. Procédé de fabrication d'une batterie secondaire de type poche, le procédé comprenant :
une étape de préparation d'empilement d'électrodes consistant à préparer un empilement d'électrodes qui comprend une première cellule unitaire ayant une première superficie et une deuxième cellule unitaire ayant une deuxième superficie inférieure à celle de la première superficie et qui présente une structure dans laquelle la deuxième cellule unitaire est disposée sur une surface de la première cellule unitaire ;
une étape de formation de surface incurvée consistant à presser au moins une partie d'une zone indépendante, qui ne chevauche pas la deuxième cellule unitaire, de la première cellule unitaire pour fabriquer l'empilement d'électrodes dans lequel une surface incurvée est formée sur au moins une partie de la zone indépendante ; et
une étape de logement consistant à loger l'empilement d'électrodes ayant la surface incurvée dans un extérieur de type poche ayant un espace interne correspondant à une forme de l'empilement d'électrodes ayant la surface incurvée,
dans lequel l'étape de préparation d'empilement d'électrodes comprend :
la fabrication de la première unité cellulaire comprenant une première sous-cellule présentant une structure dans laquelle un premier film de séparation est plié après la disposition d'une électrode et d'un séparateur sur le premier film de séparation ; et
la fabrication de la deuxième unité cellulaire comprenant une deuxième sous-cellule présentant une structure dans laquelle un deuxième film de séparation est plié après la disposition d'une électrode et d'un séparateur sur le deuxième film de séparation.

2. Procédé selon la revendication 1, dans lequel l'étape de préparation d'empilement d'électrodes comprend :
la fabrication de la première cellule unitaire ayant la première superficie par empilement d'une pluralité de premières sous-cellules après la fabrication de la pluralité de premières sous-cellules, chacune d'elles étant fabriquée par empilement d'électrodes et de séparateurs ; et
la fabrication de la deuxième cellule unitaire ayant la deuxième superficie par empilement d'une pluralité de deuxièmes sous-cellules après la fabrication de la pluralité de deuxièmes sous-cellules, chacune d'elles étant fabriquée par empilement d'électrodes et de séparateurs.

3. Procédé selon la revendication 1 ou 2, dans lequel chacune de la première et de la deuxième sous-cellule est une cellule bipolaire.
